# EUROPÄISCHE PATENTANMELDUNG

(11) **EP 1 110 484 A2**
(43) Veröffentlichungstag der Anmeldung: **27.06.2001**
(21) Anmeldenummer: 00127657.5
(22) Anmeldetag: 18.12.2000
(51) Int. Cl.: A47B 96/20, B44C 5/04

(54) **Frontteil enthaltend ein Dekorteil**

(30) Priorität: 20.12.1999 DE 19961890
(71) Anmelder: Basell Polypropylen GmbH, 55116 Mainz (DE)
(72) Erfinder: Müller, Klaus, 65843 Sulzbach (DE); Klemm, Klaus, 97656 Oberelsbach (DE)
(74) Vertreter: Siebzehnrübl, Florian, Dr.

(57) **Zusammenfassung**

Frontteil, enthaltend ein Dekorteil bestehend aus einem Träger, einer auf diesen aufgebrachten Dekorschicht und einer auf der Dekorschicht liegenden hitzegehärteten Schicht, sowie gegebenenfalls einen Verstärkungskörper zum Abstützen des Dekorteil. Das Frontteil kann zwischen dem Träger der Dekorschicht noch eine Zwischenlage enthalten. Der Träger und der Verstärkungskörper können beide jeweils aus einem thermoplastischen Polymeren bestehen, beispielsweise aus Polypropylen oder aus Polyethylen.

## Beschreibung

Die vorliegende Erfindung betrifft ein Frontteil, enthaltend ein Dekorteil bestehend aus einem Träger, einer auf diesen aufgebrachten Dekorschicht und einer auf der Dekorschicht liegenden hitzegehärteten Schicht, sowie. gegebenenfalls einen Verstärkungskörper zum Abstützen des Dekorteils. Weiterhin betrifft die vorliegende Erfindung ein Verfahren zur Herstellung des erfindungsgemäßen Formteils sowie dessen Verwendung in elektrischen Haushaltsgeräten, für den Frontbereich von Möbeln oder für den Frontbereich im Automobilbereich.

Die bisher bekannten Frontteile bestehen entweder aus einer Spanplatte, auf die eine Dekorschicht aufgebracht ist, oder aber aus einem lackierten Stahlblech.

Frontteile aus Spanplatten mit aufgebrachter Dekorschicht haben dabei den Nachteil, daß sie mit einem umlaufenden Rand versehen werden müssen, der überdies feuchtigkeitsdicht verklebt werden muß, da Spanplatten in feuchter Umgebung zum Quellen neigen. Desweiteren sind solche Frontteile aus Spanplatten mit aufgebrachter Dekorschicht nicht recycelbar. Frontteile aus lackiertem Stahlblech sind sehr aufwendig herzustellen und sind deshalb insbesondere für kleinere Stückzahlen recht teuer. Wegen der Lackierung ist überdies die Auswahl verschiedener Dekors begrenzt. Darüber hinaus sind bei den bislang bekannten Frontteilen die Formgebungsmöglichkeiten eingeschränkt. Außerdem müssen zusätzliche Funktionselemente in separaten Arbeitsschritten an die Frontteile angeformt werden.

Weiterhin sind aus der DE-A 19604370 Arbeitsplatten aus thermoplastischen Kunststoffen bekannt, die eine Kunststoffplatte enthalten, an deren Plattenunterseite eine Stützvorrichtung angebracht ist, die aus einer rostartigen, an ihrer Unterseite hin offenen Baueinheit besteht. Derartige Arbeitsplatten sind zwar feuchtigkeitsbeständig und recycelbar, müssen jedoch für einige Anwendungsbereiche nach stabiler gebaut sein.

Der vorliegenden Erfindung lag daher die Aufgabe zugrunde, den geschilderten Nachteilen abzuhelfen und ein verbessertes Frontteil aus Kunststoff herzustellen, das feuchtigkeitsunempfindlich und recycelbar ist, auf einfache Art hergestellt werden kann und das darüber hinaus eine freie Formgebung und die Integration von Funktionselementen ermöglicht.

Demgemäß wurde ein verbessertes Frontteil entwickelt, enthaltend ein Dekorteil bestehend aus einem Träger, einer auf diesen aufgebrachten Dekorschicht und einer auf der Dekorschicht liegenden hitzegehärteten Schicht, sowie gegebenenfalls einen Verstärkungskörper zum Abstützen des Dekorteils.

Das in dem erfindungsgemäßen Frontteil vorliegende Dekorteil besteht vorzugsweise aus einem Träger, einer auf diesen aufgebrachten Dekorschicht und eine auf der Dekorschicht liegenden hitzegehärteten Schicht. Weiterhin kann es sich empfehlen, zwischen dem Träger und der Dekorschicht noch eine Zwischenlage einzuziehen. Ferner können auch auf beiden Seiten des Trägers gegebenenfalls entsprechende Zwischenlagen, Dekorschichten und hitzegehärtete Schichten aufgebracht werden, wodurch eine sandwichartige Struktur mit dem Träger in der Mitte entsteht. Am Dekorteil können auch Funktionselemente angeformt sein.

Das Material des Trägers kann 1 bis 60, vorzugsweise 5 bis 50, besonders bevorzugt 10 bis 40 Gew.-%, bezogen auf das Gesamtgewicht des Trägers, an verstärkenden Füllstoffen enthalten, wie zum Beispiel Bariumsulfat, Magnesiumhydroxyd, Talkum mit einer mittleren Korngröße im Bereich von 0,1 bis 10 µm, gemessen nach DIN 66 115, Holz, Flachs, Kreide, Glasfasern, beschichtete Glasfasern, Lang- oder Kurzglasfasern, Glaskugeln oder Mischungen von diesen. Außerdem kann man dem Material des Trägers noch die üblichen Zusatzstoffe wie Licht-, UV- und Wärmestabilisatoren, Pigmente, Ruße, Gleitmittel, Flammschutzmittel, Treibmittel und dergleichen in den üblichen und erforderlichen Mengen hinzufügen. Der Träger besteht insbesondere aus thermoplastischen Polymeren.

Als thermoplastische Polymere, die den Träger des Dekorteils bilden, kommen u.a. Polypropylen, Polyethylen, Polyvinylchlorid, Polysulfone, Polyetherketone, Polyester, Polycycloolefine, Polyacrylate und Polymethacrylate, Polyamide, Polycarbonat, Polyurethane, Polyacetale wie zum Beispiel Polyoxymethylen, Polybutylenterephthalate und Polystyrole in Betracht. Dabei sind sowohl Homopolymere als auch Copolymere dieser thermoplastischen Polymere verwendbar. Vorzugsweise besteht die Trägerschicht neben den verstärkenden Füllstoffen noch aus Polypropylen, Polyoxymethylen, Polybutylenterephthalat oder aus Polystyrol, insbesondere aus Copolymeren des Styrols mit untergeordneten Anteilen an einem oder mehreren Comonomeren wie zum Beispiel Butadien, α-Methylstyrol, Acrylnitril, Vinylcarbazol sowie Estern der Acryl-, Methacryl- oder Itaconsäure. Der Träger des erfindungsgemäßen Frontteils kann auch Rezyklate aus diesen thermoplastischen Polymeren enthalten.

Unter der Bezeichnung Polyoxymethylen sollen dabei Homo- und Copolymere von Aldehyden, beispielsweise von Formaldehyd, und von cyclischen Acetalen verstanden werden, die wiederkehrende Kohlenstoff-Sauerstoff-Bindungen im Molekül enthalten und eine Schmelzflußrate (MFR), nach ISO 1133, bei 230°C und unter einem Gewicht von 2,16 kg, von 5 bis 40 g/10·min., insbesondere von 5 bis 30 g/10 min. aufweisen.

Das bevorzugt verwendete Polybutylenterephthalat ist ein höhermolekulares Veresterungsprodukt von Terephthalsäure mit Butylenglykol und einer Schmelzflußrate (MFR), nach ISO 1133, bei 230°C und unter einem Gewicht von 2,16 kg, von 5 bis 50 g/10 min., insbesondere von 5 bis 30 g/10 min.

Als Copolymere des Styrols kommen insbesondere Copolymere mit bis zu 45 Gew. -%, vorzugsweise mit bis zu 20 Gew. -% an einpolymerisiertem Acrylnitril in Betracht. Derartige Copolymere aus Styrol und Acrylnitril (SAN) weisen eine Schmelzflußrate (MFR), nach ISO 1133, bei 230°C und unter einem Gewicht von 2,16 kg, von 1 bis 25 g/10 min., insbesondere von 4 bis 20 g/10 min. auf.

Weitere ebenfalls bevorzugt eingesetzte Copolymere des Styrols enthalten bis zu 35 Gew. -%, insbesondere bis zu 20 Gew. -% einpolymerisiertes Acrylnitril und bis zu 35 Gew. -%, insbesondere bis zu 30 Gew.-% einpolymerisiertes Butadien. Die Schmelzflußrate derartiger Copolymere aus Styrol, Acrylnitril und Butadien (ABS), nach ISO 1133, bei 230°C und unter einem Gewicht von 2,16 kg, liegt im Bereich von 1 bis 40 g/10 min., insbesondere im Bereich von 2 bis 30 g/10 min.

Als Materialien für den Träger des Dekorteils werden insbesondere auch Polyolefine wie Polyethylen oder Polypropylen eingesetzt, wobei letzteres bevorzugt verwendet wird. Unter der Bezeichnung Polypropylen sollen dabei sowohl Homo- als auch Copolymere des Propylens verstanden werden. Copolymere des Propylens enthalten in untergeordneten Mengen mit Propylen copolymerisierbare Monomere, beispielsweise C₂-C₈-Alk-1-ene wie u.a. Ethylen, But-1-en, Pent-1-en oder Hex-1-en. Es können auch zwei oder mehr verschiedene Comonomere verwendet werden.

Besonders geeignete Trägermaterialien sind u.a. Homopolymere des Propylens oder Copolymere des Propylens mit bis zu 50 Gew.-% einpolymerisierter anderer Alk-1-ene mit bis zu 8 C-Atomen. Die Copolymere des Propylens sind hierbei statistische Copolymere oder Block- oder Impactcopolymere. Sofern die Copolymere des Propylens statistisch aufgebaut sind, enthalten sie im allgemeinen bis zu 15 Gew.-%, bevorzugt bis zu 6 Gew.-%, andere Alk-1-ene mit bis zu 8 C-Atomen, insbesondere Ethylen, But-1-en oder ein Gemisch aus Ethylen und But-1-en.

Block- oder Impactcopolymere des Propylens sind Polymere, bei denen man in der ersten Stufe ein Propylenhomopolymer oder ein statistisches Copolymer des Propylens mit bis zu 15 Gew.-%, bevorzugt bis zu 6 Gew.-%, anderer Alk-1-ene mit bis zu 8 C-Atomen herstellt und dann in der zweiten Stufe ein Propylen-Ethylen-Copolymer mit Ethylengehalten von 15 bis 80 Gew.-%, wobei das Propylen-Ethylen-Copolymer zusätzlich noch weitere C₄-C₈-Alk-1-ene enthalten kann, hinzupolymerisiert. In der Regel wird soviel des Propylen-Ethylen-Copolymer hinzupolymerisiert, daß das in der zweiten Stufe erzeugte Copolymer im Endprodukt einen Anteil von 3 bis 60 Gew-% aufweist.

Die Polymerisation zur Herstellung von Polypropylen kann mittels eines Ziegler-Natta-Katalysatorsystems erfolgen. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen.

Es können aber auch Katalysatorsysteme auf der Basis von Metallocenverbindungen bzw. auf der Basis von polymerisationsaktiven Metallkomplexen eingesetzt werden.

Im speziellen enthalten übliche Ziegler-Natta-Katalysatorsysteme eine titanhaltige Feststoffkomponente u.a. Halogenide oder Alkoholate des drei- oder vierwertigen Titans, ferner eine halogenhaltige Magnesiumverbindung, anorganische Oxide wie zum Beispiel Kieselgel als Träger sowie Elektronendonorverbindungen. Als solche kommen insbesondere Carbonsäurederivate sowie Ketone, Ether, Alkohole oder siliciumorganische Verbindungen in Frage.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 5 288 824 beschrieben. Bevorzugt wird das aus der DE-A 195 29 240 bekannte Verfahren angewandt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können.

Anstelle von Ziegler-Natta-Katalysatorsysteme können auch Metallocenverbindungen bzw. polymerisationsaktive Metallkomplexe zur Herstellung von Polypropylen verwendet werden.

Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben. Für einen Einsatz zur Herstellung von Polypropylen liegen die Metallocenkomplexe im Katalysatorsystem in der Regel geträgert vor. Als Träger werden häufig anorganische Oxide eingesetzt, es können aber auch organische Träger in Form von Polymeren, beispielsweise Polyolefine Verwendung finden. Bevorzugt sind die oben beschriebenen anorganischen Oxide, die auch zur Herstellung der titanhaltigen Feststoffkomponente a) verwendet werden.

Üblicherweise eingesetzte Metallocene enthalten als Zentralatome Titan, Zirkonium oder Hafnium, wobei Zirkonium bevorzugt ist. Im allgemeinen ist das Zentralatom über eine π-Bindung an mindestens eine, in der Regel substituierte, Cyclopentadienylgruppe sowie an weitere Substituenten gebunden. Die weiteren Substituenten können Halogene, Wasserstoff oder organische Reste sein, wobei Fluor, Chlor, Brom, oder Jod oder eine C₁-C₁₀-Alkylgruppe bevorzugt sind. Die Cyclopentadienylgruppe kann auch Bestandteil eines entsprechenden heteroaromatischen Systems sein.

Bevorzugte Metallocene enthalten Zentralatome, die über zwei gleichartige oder verschiedene π-Bindungen an zwei substituierte Cyclopentadienylgruppen gebunden sind, wobei diejenigen besonders bevorzugt sind, in denen Substituenten der Cyclopentadienylgruppen an beide Cyclopentadienylgruppen gebunden sind. Insbesondere sind Komplexe bevorzugt, deren substituierte oder unsubstituierte Cyclopentadienylgruppen zusätzlich durch cyclische Gruppen an zwei benachbarten C-Atomen substituiert sind, wobei die cyclischen Gruppen auch in einem heteroaromatischen System integriert sein können.

Bevorzugte Metallocene sind auch solche, die nur eine substituierte oder unsubstituierte Cyclopentadienylgruppe enthalten, die jedoch mit mindestens einem Rest substituiert ist, der auch an das Zentralatom gebunden ist.

Geeignete Metallocenverbindungen sind beispielsweise
Ethylenbis (indenyl)-zirkoniumdichlorid,
Ethylenbis (tetrahydroindenyl)-zirkoniumdichlorid,
Diphenylmethylen-9-fluorenylcyclopentadienylzirkoniumdichlorid,
Dimethylsilandiylbis(-3-tert.butyl-5-methylcyclopentadienyl)zirkoniumdichlorid,
Dimethylsilandiyl(2-methyl-4-azapentalen) (2-methyl-4(4'-methylphenyl) -indenyl) -zirkoniumdichlorid,
Dimethylsilandiyl(2-methyl-4-thiapentalen) (2-ethyl-4 (4'-tert.butylphenyl) -indenyl) -zirkoniumdichlorid,
Ethandiyl(2-ethyl-4-azapentalen) (2-ethyl-4 (4'-tert.butylphenyl) -indenyl) -zirkoniumdichlorid,
Dimethylsilandiylbis (2-methyl-4-azapentalen) -zirkoniumdichlorid,
Dimethylsilandiylbis (2-methyl-4-thiapentalen) -zirkoniumdichlorid Dimethylsilandiylbis (-2-methylindenyl) -zirkoniumdichlorid,
Dimethylsilandiylbis (-2-methylbenzindenyl) -zirkoniumdichlorid Dimethylsilandiylbis(-2-methyl-4-phenylindenyl) zirkoniumdichlorid,
Dimethylsilandiylbis (-2-methyl-4-naphthylindenyl) zirkoniumdichlorid,
Dimethylsilandiylbis(-2-methyl-4-isopropylindenyl) zirkoniumdichlorid oder
Dimethylsilandiylbis (-2-methyl-4,6-diisopropylindenyl) zirkoniumdichlorid sowie die entsprechenden Dimethylzirkoniumverbindungen.

Die Metallocenverbindungen sind entweder bekannt oder nach an sich bekannten Methoden erhältlich. Zur Katalyse können auch Mischungen derartiger Metallocenverbindungen eingesetzt werden, ferner die in der EP-A 416 815 beschriebenen Metallocenkomplexe.

Weiterhin enthalten die Metallocen-Katalysatorsysteme metalloceniumionenbildende Verbindungen. Geeignet sind starke, neutrale Lewissäuren, ionische Verbindungen mit lewissauren Kationen oder ionische Verbindungen mit Brönsted-Säuren als Kation. Beispiele sind hierfür Tris (pentafluorphenyl)boran, Tetrakis (pentafluorophenyl)borat oder Salze des N,N-Dimethylaniliniums. Ebenfalls geeignet als metalloceniumionenbildende Verbindungen sind offenkettige oder cyclische Alumoxanverbindungen. Diese werden üblicherweise durch Umsetzung von Trialkylaluminium mit Wasser hergestellt und liegen in der Regel als Gemische unterschiedlich langer, sowohl linearer als auch cyclischer Kettenmoleküle vor.

Darüber hinaus können die Metallocen-Katalysatorsysteme metallorganische Verbindungen der Metalle der I., II. oder III. Hauptgruppe des Periodensystems enthalten wie n-Butyl-Lithium, n-Butyl-n-octyl-Magnesium oder Tri-iso-butyl-aluminium, Triethylaluminium oder Trimethylaluminium.

Die Herstellung der für die Trägerschicht verwendeten Polypropylene wird durch Polymerisation in wenigstens einer, häufig auch in zwei oder noch mehr hintereinandergeschalteten Reaktionszonen (Reaktorkaskade), in der Gasphase, in einer Suspension oder in einer flüssigen Phase (Bulkphase) durchgeführt. Es können die üblichen, für die Polymerisation von C₂-C₈-Alk-1-enen verwendeten Reaktoren eingesetzt werden. Geeignete Reaktoren sind u.a. kontinuierlich betriebene Rührkessel, Schleifenreaktoren oder Wirbelbettreaktoren. Die Größe der Reaktoren ist hierbei nicht von wesentlicher Bedeutung. Sie richtet sich nach dem Ausstoß, der in der oder in den einzelnen Reaktionszonen erzielt werden soll.

Als Reaktoren werden insbesondere Wirbelbettreaktoren sowie horizontal oder vertikal gerührte Pulverbettreaktoren verwendet. Das Reaktionsbett besteht im allgemeinen aus dem Polymerisat aus C₂-C₈-Alk-1-enen, das im jeweiligen Reaktor polymerisiert wird.

Die Polymerisation zur Herstellung der als Trägerschichten verwendeten Polypropylene wird unter üblichen Reaktionsbedingungen bei Temperaturen von 40 bis 120°C, insbesondere von 50 bis 100°C und Drücken von 10 bis 100 bar, insbesondere von 20 bis 50 bar vorgenommen.

Die als Träger verwendeten Polypropylene weisen in der Regel eine Schmelzflußrate (MFR), nach ISO 1133, von 0,1 bis 200 g/10 min., insbesondere von 0,2 bis 100 g/10 min., bei 230°C und unter einem Gewicht von 2,16 kg, auf.

Als Träger können für das Dekorteil des erfindungsgemäßen Frontteiles auch Blends, d.h. Mischungen unterschiedlicher thermoplastischer Polymerer verwendet werden, beispielsweise Blends aus einem Copolymeren des Styrols mit Acrylnitril und einem Copolymeren aus Butadien und Acrylnitril.

Vorzugsweise enthält das Dekorteil noch eine Zwischenlage zwischen dem Träger und der Dekorschicht, insbesondere eine Schicht aus einem thermoplastischen Kunststoff als Verbundmaterial, vorzugsweise aus dem gleichen thermoplastischen Kunststoff wie der Träger, wodurch sich die Haftung zwischen Träger und Zwischenlage besonders verbessert. Die Zwischenlage liegt insbesondere als dünne Folie oder aber als dünnes Vlies mit einer Dicke von 0,001 bis 1,0 mm, insbesondere von 0,005 bis 0,3 mm vor. Als Materialien für die Zwischenlage kommen die gleichen thermoplastischen Kunststoffe in Frage, wie sie bereits für die Träger beschrieben sind, also insbesondere Polypropylen und Polyethylen, Polymere des Styrols, Polyoxymethylen oder Polybutylenterephthalat.

Bevorzugt wird als Zwischenlage auch ein mit Harz getränktes Vlies oder eine mit Harz getränkte Folie aus einem thermoplastischen Kunststoff verwendet. Als Harze finden hierfür insbesondere Acrylatharze, Phenolharze, Harnstoffharze oder Melaminharze Verwendung. Der Grad der Beharzung kann dabei bis zu 300 % betragen, was bedeutet, daß praktisch die gesamte Oberfläche der Zwischenlage mehrfach mit Harz bedeckt ist. Vorzugsweise liegt der Grad der Beharzung bei 50 bis 150 %, insbesondere bei 80 bis 120 %. Das Gewicht der Zwischenlage pro m² liegt im Bereich von 15 bis 150 g, insbesondere im Bereich von 30 bis 60 g.

Das in dem erfindungsgemäßen Frontteil vorliegende Dekorteil enthält weiterhin zwischen dem Träger und der hitzegehärteten Schicht noch eine Dekorschicht.

Die Dekorschicht kann aus einem Kunststoffmaterial bestehen, das eine Prägung oder eine Färbung oder beides in Kombination ist, beispielsweise in Form eines Fertiglaminates. Die Dekorschicht kann aber auch aus Papier oder aus einem Gewebe oder einem papierähnlichen oder gewebeähnlichen oder holzähnlichen oder metallähnlichen Material aufgebaut sein. Beispiele hierfür wären Dekorschichten aus einem aluminiumartigen Material oder aus einem edelstahlartigen Material oder aber aus leder-, seide-, holz-, kork- oder linoleumartigen Material. Die Dekorschicht kann ebenfalls mit Acryl-, Phenol-, Harnstoff- oder Melaminharzen beharzt sein, wobei der Grad der Beharzung bei 50 bis 300 %, insbesondere bei 100 bis 300 %, bezogen auf das Gewicht der Dekorschicht liegen kann. Das Gewicht der Dekorschicht liegt üblicherweise im Bereich von 10 bis 200 g pro m², insbesondere im Bereich von 30 bis 150 g pro m² und besonders bevorzugt im Bereich von 50 bis 130 g pro m². Die Dekorschicht kann auch aus einem farbigen Kunststoffmaterial bestehen.

Die auf der Dekorschicht angeordnete hitzegehärtete Schicht (Overlay) besteht vorzugsweise aus einem duroplastischen Kunststoffmaterial, beispielsweise aus einem mit Acrylharz, Phenolharz, Melaminharz oder Harnstoffharz getränktem Papier, das durch Druck- oder Hitzeeinwirkung während der Herstellung des Schichtverbundmaterials vernetzt wird. Das Gewicht der hitzegehärteten Schicht (Overlay) liegt üblicherweise im Bereich von 10 bis 300 g pro m², insbesondere im Bereich von 15 bis 150 g pro m² und besonders bevorzugt im Bereich von 20 bis 70 g pro m².

Die hitzegehärtete Schicht (Overlay) kann auch als Fertiglaminat wahlweise einseitig oder auch beidseitig auf der Zwischenlage bzw. auf dem Träger angeordnet sein. Es ist auch möglich, ein Fertiglaminat auf die Zwischenlage aufzubringen, welches aus der Dekorschicht und aus dem Overlay besteht. Derartige Fertiglaminate sind als solche bekannt und u.a. von der Firma Melaplast in Schweinfurt, Deutschland erhältlich.

Die Gesamtdicke des Dekorteils bestehend aus dem Träger, gegebenenfalls der Zwischenlage, der Dekorschicht und der hitzegehärteten Schicht liegt im Bereich von 0,5 mm bis 10 mm, vorzugsweise im Bereich von 1 mm bis 3 mm, wobei auf den Träger wenigstens 10 %, vorzugsweise 50 bis 95 % der Gesamtdicke entfallen.

Die Herstellung des Dekorteils kann nach einem Verfahren erfolgen, bei welchem die Materialien für die Dekorschicht, die hitzegehärtete Schicht und gegebenenfalls der Zwischenlage jeweils in Form dünner, flächiger Gebilde vorgelegt werden und anschließend bei Temperaturen von 150 bis 300°C, insbesondere von 160 bis 280°C, mit dem Material für den Träger verbunden werden.

Die Dekorschicht und die hitzegehärtete Schicht (Overlay), sowie gegebenenfalls die Zwischenlage können zusammen auch in Form eines Fertiglaminats eingesetzt werden, welches ebenfalls als flächiges Gebilde vorliegt. Das Verbinden der einzelnen Schichten miteinander kann auch durch übliche Verarbeitungsverfahren in der Kunststoffindustrie erfolgen. Übliche Verarbeitungsverfahren sind hierbei u.a. das Spritzgießen, die Extrusion, das Blasformen oder das thermische Verpressen der einzelnen Schichten. Am Dekorteil können ferner Funktionselemente angeformt sein.

Weiterhin kann das erfindungsgemäße Frontteil noch einen Verstärkungskörper mit integrierten, angeformten Funktionselementen enthalten, wobei der Verstärkungskörper einen rostartigen, verrippten, platten- oder kastenartigen Aufbau aufweist, vorzugsweise an seiner Unterseite hin geschlossen ist und die Aufgabe hat, das Dekorteil abzustützen.

Am Dekorteil und/oder am Verstärkungskörper können ferner jeweils Funktionselemente befestigt werden. Derartige Funktionselemente ermöglichen u. a. eine feste oder eine bewegliche Verbindung zu einem Grundkörper, zum Beispiel zu einem Geräterahmen oder zu einem Möbelkasten. Unter der Bezeichnung Funktionselemente sollen dabei u.a. Schraubdome, Schrauben, Muttern, Stifte, Nieten, Schnapphacken (Clipse) für eine feste Verbindung zum Grundkörper, aber auch Filmscharniere oder Federelemente aus Kunststoff für eine bewegliche Verbindung zum Grundkörper verstanden werden. Diese Funktionselemente können direkt an das Dekorteil oder an den Verstärkungskörper angeformt sein und aus dem gleichen Kunststoff bestehen wie das Dekorteil oder der Verstärkungskörper. Die Funktionselemente können aber auch mit dem Dekorteil oder dem Verstärkungskörper verschweißt werden, sowie in das Dekorteil oder den Verstärkungskörper in Form von Einlegeteilen aus Metall eingebracht werden. Als Einlegeteile können auch Federelemente, Scharniere, Schloßteile, Leisten und Beschläge Verwendung finden.

Der Verstärkungskörper besteht vorzugsweise aus thermoplastischen Polymeren, wobei bezüglich der einzelnen Arten von thermoplastischen Polymeren auf die Beschreibung der Bestandteile des Trägers des Dekorteils verwiesen werden kann. Der Verstärkungskörper kann aber auch aus Metallen oder aber aus duroplastischen Polymeren aufgebaut sein. Weiterhin kann es sich empfehlen, den Verstärkungskörper aus dem gleichen thermoplastischen Polymeren anzufertigen wie das Dekorteil, beispielsweise aus Polypropylen.

Die Herstellung eines solchen Verstärkungskörpers mit integrierten und angeformten Funktionselementen kann in der Weise erfolgen, daß man einen rost-, platten-, kasten- oder rippenartigen Grundkörper, der vorzugsweise an seiner Unterseite hin geschlossen ist, direkt mit den Funktionselementen herstellt (d.h. diese integriert) oder mit dem oder den Funktionselementen verschweißt, wobei die Schweißebene aus optischen Gründen auch aus dem Sichtbereich verlegt werden kann, um einen ununterbrochenen Rand zu erhalten. Die Verbindung von rost-, platten-, kasten- oder rippenartigen Grundkörper mit dem oder den integrierten, angeformten Funktionselementen kann aber auch mittels Verschraubung, Vernietung oder Verrastung oder durch mechanische Befestigungselemente, beispielsweise Schnappverbindungen durchgeführt werden. Die Dimensionierung der Verstärkungskörper, beispielsweise bezüglich ihrer Wandstärke oder ihrer Rippengeometrie kann beispielsweise durch die FEM-Computerberechnungsmethode gemäß dem jeweiligen Anforderungsprofil erfolgen, um auf diese Weise eine möglichst materialsparende Grundkonstruktion zu erhalten.

Der rost-, platten-, kasten- oder rippenartige Grundkörper sowie die integrierten, geformten Funktionselemente, aus denen sich der Verstärkungskörper zusammensetzt, können durch übliche Verfahren, beispielsweise durch Spritzgießen, durch Extrusion, durch Blasformen oder durch thermisches Verpressen hergestellt werden.

Die Herstellung des erfindungsgemäßen Frontteils kann durch Zusammenfügen des Dekorteils mit dem Verstärkungskörper erfolgen. Nach einem bevorzugten Herstellungsverfahren wird dabei das Dekorteil mit dem Verstärkungskörper durch Verschweißen mittels eines Heizelementes verbunden. Die Verbindung von Dekorteil und Verstärkungskörper kann aber auch durch Verschraubung, Vernietung oder Verrastung, oder durch mechanische Befestigungselemente, u.a. Klammern oder Schnappverbindungen durchgeführt werden.

Die Verbindung des erfindungsgemäßen Frontteils mit dem entsprechenden Grundkörper erfolgt üblicherweise durch angeformte Befestigungselemente, beispielsweise durch Verschraubung, durch Verrastung oder durch deren Kombination, entsprechend den Anforderungen und gerätetechnischen Voraussetzungen der Hersteller derartiger Geräte, Möbel oder Teile. Aufgrund der speziellen Anordnung des erfindungsgemäßen Frontteils ist es dabei möglich, entsprechende Befestigungselemente, wie zum Beispiel Schraubdome, Klammern oder Schnappverbindungen bereits bei der Herstellung des Verstärkungskörpers direkt an diesen anzuformen, so daß eine zusätzliche Montage von Befestigungselementen entfallen kann.

Die erfindungsgemäßen Frontteile zeichnen sich u.a. durch eine hohe Festigkeit und Stabilität aus, sind feuchtigkeits-, kratzchemikalienunempfindlich, auf einfache Weise herstellbar und außerdem recycelfähig, insbesondere dann, wenn sowohl im Dekorteil, als auch im Verstärkungskörper das gleiche thermoplastische Polymere verwendet wird. Da der Verstärkungskörper mit integrierten, geformten Funktionselementen versehen sein kann, kann man überdies bei der Montage des erfindungsgemäßen Frontteils mit dem entsprechende Gerät, Teil oder Möbelstück, auf einige Arbeitsvorgänge verzichten.

Das erfindungsgemäße Frontteil eignet sich u.a. als Bestandteil in elektrischen Haushaltsgeräten, beispielsweise als Bestandteil (Türen, Deckel oder Seitenteile) von Kühlschränken, Gefrierschränken, Waschmaschinen, Spülgeräten oder Trocknern, ferner für den Frontbereich von Möbeln beispielsweise für Küchen oder Caravane oder Boote. Das erfindungsgemäße Frontteil kann ferner auch für den Frontbereich im Automobilbereich, beispielsweise bei Verkleidungen, verwendet werden.

Das ebenfalls erfindungsgemäße Verfahren zur Herstellung der Frontteile ist einfach durchzuführen und zeichnet sich insbesondere dadurch aus, daß es unter Einsatz üblicher Montageverfahren durchgeführt werden kann.

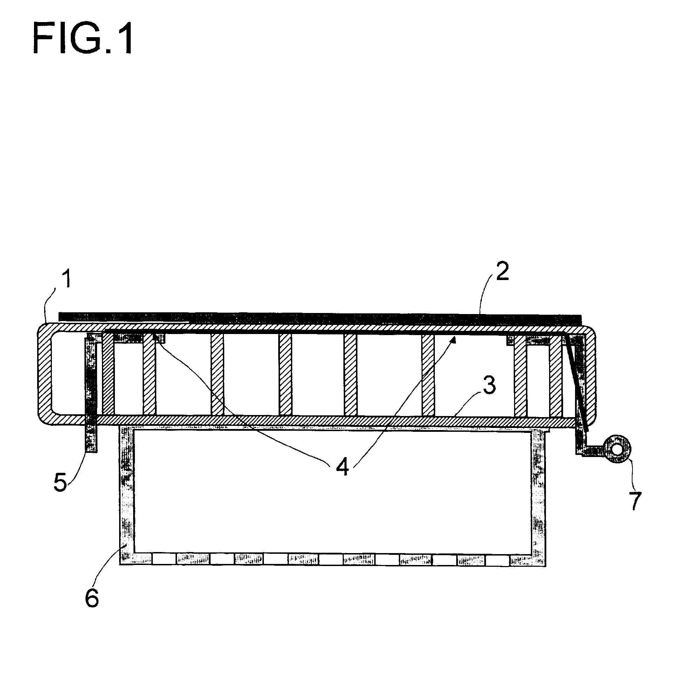

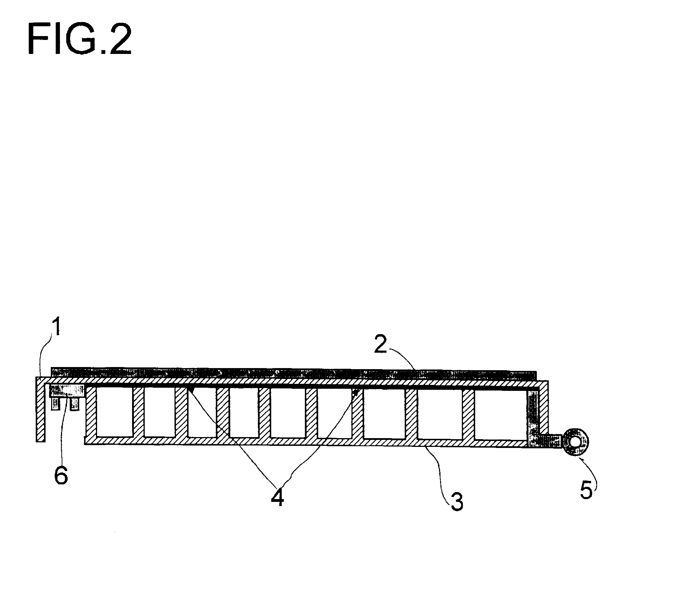

Einige beispielhafte Ausführungsformen der erfindungsgemäßen Frontteile sind in den nachfolgenden Zeichnungen - Figuren 1 und 2 - schematisch dargestellt und im folgenden näher erläutert.

Es zeigt,
Figur 1 eine Fronttür eines Wäschetrockners und
Figur 2 ein Frontteil einer Möbeltür

### Beschreibung Figur 1:

Figur 1 zeigt eine Fronttür für einen Wäschetrockner, bestehend aus einem Dekorteil [Träger (1) und Dekorschicht (2)] die mit einem Verstärkungskörper (3) zu einem kastenartigen Bauteil mittels eines Heizelementes verschweißt wurde [Schweißebene (4)].

Der Träger (1) besteht aus einem Propylenhomopolymeren (z.B. Hostacom® PPU 2090L, der Targor GmbH), der Verstärkungskörper (3) und die Türkappe (oder Grobsieb) (6) ist aus einem mit Talkum verstärktem Polypropylen aufgebaut (Hostacom® HC M4U42, der Targor GmbH).

Am Verstärkungskörper sind verschiedene Funktionselemente, z.B. ein Schloß (5) und die Scharnierteile (7) angeformt.

Die Fertigung der Fronttür erfolgt nun in folgenden Schritten:
1) Fertigung der Einzelteile Türkappe (Grobsieb) (6),Schloß (5), Scharnier (7), Verstärkungskörper (3) und Dekorteil [Träger (1) und Dekorschicht (2)]
2) Anformen der Türkappe (Grobsieb) (6) an den Verstärkungskörper (3)
3) Verschweißen von Dekorteil mit dem Verstärkungskörper. Der Arbeitsschritt 3 kann auch bereits als Arbeitsschritt 2 erfolgen. Bei diesem Arbeitsgang werden die beiden Scharnierteile (7) und das Schloß (5) - beispielsweise aus Metall oder aus einem thermoplastischen Kunststoff - zwischen das Dekorteil und den Verstärkungskörper eingelegt und über einen Schweißvorgang fixiert.

### Beschreibung Figur 2:

Figur 2 zeigt ein Frontteil für eine Möbeltür, bestehend aus einem Dekorteil [Träger (1) und Dekorschicht (2)], die mit einem Verstärkungskörper (3) zu einem kastenartigen Bauteil durch ein Heizelement verschweißt wurde '[Schweißung (4)].

Der Träger (1) besteht aus einem handelsüblichen, eingefärbten ABS-Kunststoff (Terpolymer aus Acrylnitril, Butadien und Styrol). Der Verstärkungskörper (3) kann aus einem mit Treibmittel versehenen Polystyrol (auch schlagzäh-modifiziert) oder aus einem Recyclat aus ABS-Kunststoffen hergestellt werden. An den Verstärkungskörper (3) sind bereits Funktionselemente, Scharnierteil (5) und Schraubdome (6) zur Befestigung der Platte am Möbel angeformt. Das Türschloß wird am Schraubdom angeschweißt.

Die Fertigung des Teiles erfolgt nun in folgenden Schritten:
1) Fertigung der Einzelteile: Verstärkungskörper (mit Scharnierteil und Schraubdome) und Dekorteil (Träger und Laminat)
2) Verschweißen von Dekorteil mit dem Verstärkungskörper

## Patentansprüche

1. Frontteil, enthaltend ein Dekorteil bestehend aus einem Träger, einer auf diesen aufgebrachten Dekorschicht und einer auf der Dekorschicht liegenden hitzegehärteten Schicht, sowie gegebenenfalls einen Verstärkungskörper zum Abstützen des Dekorteils.

2. Frontteil nach Anspruch 1, wobei beim Dekorteil zwischen dem Träger und der Dekorschicht noch eine Zwischenlage vorliegt.

3. Frontteil nach einem der Ansprüche 1 oder 2, wobei der Verstärkungskörper einen platten-, kasten-, rostartigen oder verrippten Aufbau aufweist.

4. Frontteil nach einem der Ansprüche 1 bis 3, wobei der Träger aus einem thermoplastischen Polymeren besteht.

5. Frontteil nach einem der Ansprüche 1 bis 4, wobei der Verstärkungskörper aus einem thermoplastischen Polymeren besteht.

6. Frontteil nach einem der Ansprüche 1 bis 5, wobei am Dekorteil zusätzliche Funktionselemente angeformt sind.

7. Frontteil nach einem der Ansprüche 1 bis 6, wobei am Verstärkungskörper zusätzliche Funktionselemente angeformt sind.

8. Verfahren zur Herstellung eines Frontteils gemäß einem der Ansprüche 1 bis 7, dadurch gekennzeichnet, daß die Materialien für die Dekorschicht, die hitzegehärtete Schicht und gegebenenfalls die Zwischenlage jeweils in Form dünner, flächiger Gebilde vorgelegt werden und anschließend bei Temperaturen von 150 bis 300°C mit dem Material für den Träger verbunden werden.

9. Verfahren zur Herstellung eines Frontteils mit einem Verstärkungskörper nach Anspruch 8, dadurch gekennzeichnet, daß das Dekorteil mit dem Verstärkungskörper über einen Schweißvorgang verbunden wird.

10. Verfahren zur Herstellung eines Frontteils mit einem Verstärkungskörper nach Anspruch 8, dadurch gekennzeichnet, daß das Dekorteil mit dem Verstärkungskörper durch das Anbringen von geeigneten Schnappverbindungen verbunden wird.

11. Verfahren zur Herstellung eines Frontteils mit einem Verstärkungskörper nach Anspruch 8, dadurch gekennzeichnet, daß das Dekorteil mit dem Verstärkungskörper durch das Anbringen von Schraub- oder Nietverbindungen verbunden wird.

12. Verwendung eines Frontteils nach einem der Ansprüche 1 bis 7 in elektrischen Haushaltsgeräten.

13. Verwendung eines Frontteils nach einem der Ansprüche 1 bis 7 für den Frontbereich von Möbeln.

14. Verwendung eines Frontteils nach einem der Ansprüche 1 bis 7 für den Frontbereich im Automobilbau.
